# EUROPEAN PATENT SPECIFICATION

(11) **EP 1 878 776 B1**
(45) Date of publication and mention of the grant of the patent: **07.09.2011**
(21) Application number: 06732268.5
(22) Date of filing: 24.04.2006
(51) Int. Cl.: C08F 290/06, C09J 4/00

(54) **ADHESIVE COMPOSITION CURABLE WITH ACTINIC ENERGY RAY**
AKTINISCH HÄRTBARE KLEBSTOFFZUSAMMENSETZUNG
COMPOSITION ADHESIVE DURCISSABLE AVEC UN RAYON ENERGETIQUE ACTINIQUE

(30) Priority: 28.04.2005 JP 2005132615
(43) Date of publication of application: 16.01.2008
(73) Proprietor: TOAGOSEI CO., LTD., Minato-ku Tokyo 105-8419 (JP)
(72) Inventor: OSOEGAWA, Mikihide C/o Toagosei Co., Ltd., Nagoya-shi, Aichi 455-0027 (JP)
(74) Representative: Wilhelms · Kilian & Partner Patentanwälte
(86) International application number: PCT/JP2006/308557
(87) International publication number: WO 2006/118078

(56) References cited:
- EP-A1- 1 376 561
- JP-A- 60 047 086
- JP-A- 60 055 072
- JP-A- 2002 097 217
- US-A1- 2003 021 943
- US-A1- 2004 229 990
- US-B1- 6 337 118

## Description

The present invention relates to an active energy beam-curable adhesive composition that can carry out bonding of various types of substrates by irradiation with active energy beam such as an electron beam or UV rays.

The composition of the present invention is suitably used for laminate bonding of a thin layer adherend such as a plastic film or a plastic sheet used as an optical component and, furthermore, is suitably used in the production of various types of optical film or sheet used in a liquid crystal display device, an EL (electroluminescence) display device, a projection display device, an FED (field emission (field emission) display) display device, a plasma display device, etc., and is valued in these technical fields.

### Background Art

Conventionally, as a lamination method in which thin layer adherends such as plastic films or sheets are laminated to each other or in which a thin layer adherend such as a plastic film or sheet and a thin layer adherend made of another material are laminated, a dry laminate method is mainly carried out in which, after a solvent type adhesive composition containing an ethylene-vinyl acetate copolymer or a polyurethane-based polymer is applied to a first thin layer adherend and dried, a second thin layer adherend is compression-bonded thereto by means of a nip roller.

The adhesive composition used in this method generally contains a large amount of solvent in order to make the amount of composition applied uniform, and because of this a large amount of solvent vapor escapes during drying, thus causing problems in terms of toxicity, work safety, and environmental pollution.

As an adhesive composition that solves these problems, a solvent free adhesive composition has been examined.

As the solvent free adhesive composition, a two-part adhesive composition and an adhesive composition that is cured by active energy beam such as UV rays or an electron beam are widely used.

As the two-part adhesive composition, a so-called polyurethane-based adhesive composition is used, in which the main agent is a polymer mainly having a terminal hydroxyl group and the curing agent is a polyisocyanate compound having a terminal isocyanate group. However, this composition has the defect that the curing time is too long.

In contrast thereto, the active energy beam-curable adhesive composition has a high curing rate, therefore has excellent productivity, and has been attracting attention recently.

On the other hand, a thin display device such as a liquid crystal display device is widely used not only as a simple display device in a digital watch or in various types of electrical appliances but also as a display device of a television, a portable personal computer, a cellular telephone, a word processor. In recent years, active energy beam-curable adhesives have been used for the lamination of various types of optical film used in the liquid crystal display device.

An adhesive composition used for the optical film is required to maintain its adhesive power under severe conditions of high temperature and high humidity. Although most conventional active energy beam-curable adhesive compositions have excellent adhesive strength in an initial stage, when they are used continuously for a long period of time under high temperature or high humidity, the adhesive strength thereof deteriorates, thus causing peeling off or whitening(opaque) due to moisture absorption.

As an active energy beam-curable adhesive composition having excellent adhesion under high temperature and high humidity the present applicant has so far proposed a composition comprising a urethane (meth)acrylate and a polymer having a glass transition temperature of at least 40°C (Patent Publication 1) or a composition comprising a urethane (meth)acrylate and an imide group-containing (meth)acrylate (Patent Publication 2).

Furthermore, the present applicant has proposed, as an adhesive for a polymethyl methacrylate (PMMA) plate and a film, an active energy beam-curable adhesive composition comprising a urethane (meth)acrylate and a specific aromatic monofunctional (meth)acrylate (Patent Publication 3), but when this is used as a lamination adhesive between films, the adhesive strength is insufficient.
(Patent Publication 1)
   JP-A-2000-072833 (Claims) (JP-A denotes a Japanese unexamined patent application publication)
(Patent Publication 2)
   JP-A-2001-064594 (Claims)
(Patent Publication 3)
   Japanese Patent Application No. 2004-091926 (Claims) (JP-A-2005-272773 (Claims))

EP 1 376 561 A1 discloses an active ray curable adhesive composition comprising at least one urethane (meth)acrylate, at least one N,N-dialkyl(meth)acrylamide, at least one alkyl(meth)acrylate, optionally at least one hydroxyalkyl(meth)acrylate, and at least one photoinitator.

US 6,337,118 B1 describes an adhesive for optical disks comprising a urethane(meth)acrylate oligomer, a hyroxy(meth)acrylate in which the hydroxyl group and the (meth)acrylate group are separated by at least 3 carbons, and at least one photoinitiator.

US 2003/0021943 A1 discloses a photocurable resin composition comprising a urethane(meth)acrylate produced by reacting a polyether polyol, an organic polyisocyanate compound, and a (meth)acrylate containing a hydroxyl group; a monofunctional (meth)acrylate comprising a phenyl group; and a photoinitiator.

US 2004/229990 A1 discloses an ambient temperature curing epoxy-modified two-part acrylic structural adhesive system characterized by improved T-peel strength.

JP 2002 097217 A describes a photocurable resin composition containing a sulphur-containing (meth)acrylate compound, a polymerization inhibitor, and a polymerization initiator.

However, in recent years, there has been a demand for use under more severe conditions such as high temperature or high humidity, use outdoors under sunlight, and for a longer product life, and the conventionally proposed adhesive compositions are not satisfactory due to problems such as a decrease in the adhesive strength or coloration over time.

The present inventors have carried out an intensive investigation in order to find an active energy beam-curable adhesive composition having excellent adhesive power under high temperature and high humidity conditions and causing little coloration even when used for a long period of time.

As a result of various investigations by the present inventors, it has been found that an active energy beam-curable adhesive composition that is a composition comprising a urethane (meth)acrylate having a specific structure and a specific monofunctional (meth)acrylate having a cyclic structure, among which methacrylate is contained at a specific proportion, has excellent adhesive power under either high temperature or high humidity conditions and causes little coloration, which is at a practical level, and the present invention has thus been accomplished as shown below.

The present invention is an active energy beam-curable adhesive composition (hereinafter, also simply called a 'composition') comprising (A) 5 to 50 weight % of a urethane (meth)acrylate having a polyester or polycarbonate skeleton (hereinafter, also called component (A)), (B) 5 to 95 weight % of a compound having one (meth)acryloyl group represented by formula (1) below or/and a compound having one (meth)acryloyl group represented by formula (2) below (hereinafter, also called component (B)), and as necessary (C) 0 to 85 weight % of an ethylenically unsaturated group-containing compound other than components (A) and (B) above (hereinafter, also called component (C)), 5 to 30 weight % of methacrylate compound being contained in the total amount of components (A) to (C).

As component (B), one represented by formula (1) in which R₂ is a phenyl or cumyl group and one represented by formula (2) in which R₄ is a *t*-butyl group are preferable.

As the composition of the present invention, one that gives a cured material having a glass transition temperature of 10°C to 70°C is preferable.

The composition of the present invention can preferably be used as an active energy beam-curable adhesive composition for optical materials and can also preferably be used as an active energy beam-curable adhesive composition for optical film lamination.

Moreover, the present invention is a process for producing a laminate, the process comprising coating a first substrate with any one of the compositions, laminating a second substrate thereon, and then irradiating from the surface of either substrate with active energy beam.

The adhesive composition of the present invention can maintain excellent adhesive power under high temperature and high humidity conditions, causes little coloration over time, is effective for bonding of a thin layer adherend such as a plastic film used as various types of optical member, and can particularly suitably be used in the production of an optical film used in a liquid crystal display device.

The present invention is explained in detail below.

In the present specification, acrylate and/or methacrylate are called (meth)acrylate, an acryloyl group and/or a methacryloyl group are called a (meth)acryloyl group, and acrylic acid and/or methacrylic acid are called (meth)acrylic acid.

The active energy beam-curable adhesive composition of the present invention comprises as constituent components (A) a urethane (meth)acrylate having a polyester or polycarbonate skeleton, (B) a compound having one (meth)acryloyl group represented by formula (1) below (hereinafter, called monofunctional (meth)acrylate 1) or/and a compound having one (meth)acryloyl group represented by formula (2) below (hereinafter, called monofunctional (meth)acrylate 2), and as necessary (C) an ethylenically unsaturated group-containing compound other than components (A) and (B) above.

Each of the components is explained below.

As components (A) to (C), each compound described below may be used on its own or in a combination of two or more types.

### 1. Component (A)

Component (A) is a urethane (meth)acrylate having a polyester or polycarbonate skeleton. In the present invention, since component (A) is contained, a cured material obtained has excellent adhesive power under high temperature and high humidity conditions.

On the other hand, a composition comprising a urethane (meth)acrylate having a skeleton other than a polyester or a polycarbonate, which is different from component (A), gives a cured material having degraded adhesive power under high temperature and high humidity conditions.

Component (A) may be either an oligomer or a polymer; one having a weight-average molecular weight of 500 to 50,000 is preferable, and it is more preferably 3,000 to 40,000, and particularly preferably 10,000 to 30,000.

The weight-average molecular weight referred to in the present invention is a molecular weight measured by gel permeation chromatography on a polystyrene basis.

As component (A), various types of compound may be used, and examples thereof include a compound obtained by reacting a hydroxyl group-containing (meth)acrylate with a reaction product between a polyol having a polyester or polycarbonate skeleton and an organic polyisocyanate.

Furthermore, component (A) is preferably a urethane (meth)acrylate having two (meth)acryloyl groups (hereinafter, also called a difunctional urethane (meth)acrylate), and is more preferably a difunctional urethane (meth)acrylate obtained by reacting a hydroxyl group-containing (meth)acrylate with a reaction product between a diol having a polyester or polycarbonate skeleton and an organic diisocyanate.

Examples of the polyol having a polyester skeleton include an esterification product of a diol component such as a low molecular weight diol or a polycaprolactone diol with an acid component such as a dibasic acid or an anhydride thereof.

Examples of the low molecular weight diol include ethylene glycol, propylene glycol, cyclohexanedimethanol, 3-methyl-1,5-pentanediol, and 1,6-hexanediol.

Examples of the dibasic acid or an anhydride thereof include adipic acid, succinic acid, phthalic acid, tetrahydrophthalic acid, hexahydrophthalic acid, and terephthalic acid, and anhydrides thereof.

Examples of the polycarbonate polyol include a reaction product of the low molecular weight diol or/and a bisphenol such as bisphenol A with a dialkyl carbonate such as dibutyl carbonate or ethylene carbonate.

Examples of the organic polyisocyanate include tolylene diisocyanate, 1,6-hexane diisocyanate, 4,4'-diphenylmethane diisocyanate, polymethylene polyphenyl isocyanate, 1,6-hexane diisocyanate trimer, hydrogenated tolylene diisocyanate, hydrogenated 4,4'-diphenylmethane diisocyanate, xylylene diisocyanate, hydrogenated xylylene diisocyanate, paraphenylene diisocyanate, tolylene diisocyanate dimer, 1,5-naphthalene diisocyanate, hexamethylene diisocyanate adduct, 4,4'-dicyclohexylmethane diisocyanate, trimethylolpropane tris(tolylene diisocyanate) adduct, and isophorone diisocyanate. Furthermore, the organic polyisocyanate is preferably an organic diisocyanate.

Examples of the hydroxyl group-containing (meth)acrylate include hydroxyalkyl (meth)acrylates such as 2-hydroxyethyl (meth)acrylate, 2-hydroxypropyl (meth)acrylate, hydroxybutyl (meth)acrylate, hydroxypentyl (meth)acrylate, hydroxyhexyl (meth)acrylate, hydroxyoctyl (meth)acrylate, pentaerythritol tri-, di-, or mono-(meth)acrylate, and trimethylolpropane di- or mono-(meth)acrylate.

They are obtained by stirring and heating the organic isocyanate and polyol component used in the presence of an addition catalyst such as dibutyltin dilaurate so as to effect an addition reaction, further adding a hydroxyalkyl (meth)acrylate, and stirring and heating so as to effect an addition reaction.

As component (A), from the viewpoint of particularly excellent adhesive strength under high humidity and little coloration of the cured adhesive over time, a urethane acrylate employing a nonaromatic polyester polyol or polycarbonate polyol is preferable.

### 2. Component (B)

Component (B) is monofunctional (meth)acrylate 1 or/and monofunctional (meth)acrylate 2. In the present invention, since component (B) is contained, coloration over time can be greatly suppressed.

Monofunctional (meth)acrylate 1 is a compound represented by formula (1) below, and monofunctional (meth)acrylate 2 is a compound represented by formula (2) below. 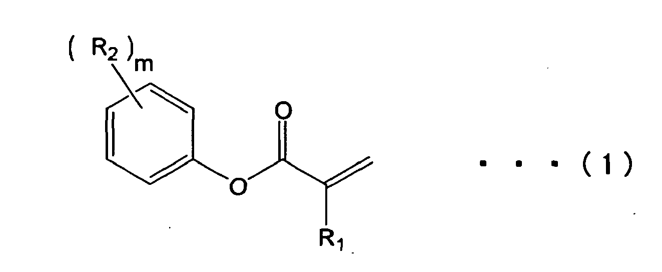 (In formula (1), R₁ denotes a hydrogen atom or a methyl group, and R₂ denotes a halogen atom or a hydrocarbon group that has 10 or less carbons and does not have a hydrogen atom on the α-position carbon atom. m denotes an integer of 1 to 5.) 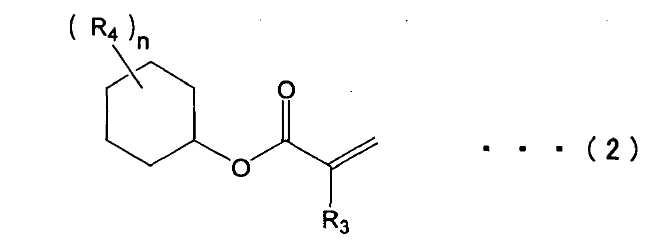 (In formula (2), R₃ denotes a hydrogen atom or a methyl group, and R₄ denotes a halogen atom or a hydrocarbon group that has 10 or less carbons and does not have a hydrogen atom on the α-position carbon atom. n denotes an integer of 1 to 5.)

In formulae (1) and (2) above, R₂ and R₄ respectively are halogen atoms or hydrocarbon groups that have 10 or less carbons and do not have a hydrogen atom on the α-position carbon atom.

In formulae (1) and (2) above, when a monofunctional (meth)acrylate in which R₂ and R₄ respectively are a hydrocarbon group having a hydrogen atom on the α-position carbon atom is used, a cured material obtained turns yellow.

Specific examples of the hydrocarbon group denoted by R₂ and R₄ that has 10 or less carbons and does not have a hydrogen atom on the α-position carbon atom (hereinafter, simply called the hydrocarbon group) include a *t*-butyl group, a phenyl group, a cumyl group, a perfluoroalkyl group such as a trifluoromethyl group, and a hexafluorocumyl group. Examples of the halogen atom include a chlorine atom and a bromine atom.

When R₂ in formula (1) is the hydrocarbon group, m is preferably 1, and when R₄ in formula (2) is the hydrocarbon group, n is preferably 1.

When R₂ in formula (1) is a halogen atom, m is preferably 1 to 3, and when R₄ in formula (2) is a halogen atom, n is preferably 1 to 3. A compound for which m and n satisfy the above ranges has excellent compatibility with other components.

From the viewpoint of the adhesive strength being high under high temperature or high humidity and there being little coloration over time, R₂ is preferably a phenyl group or a cumyl group. From the viewpoint of the adhesive strength being high under high temperature or high humidity and there being little coloration over time, R₄ is preferably a *t*-butyl group.

Specific examples of monofunctional (meth)acrylate 1 include the compounds below.

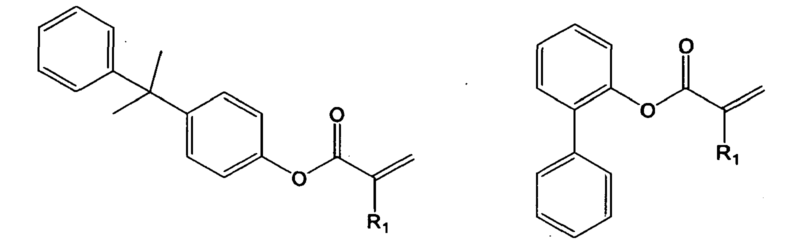

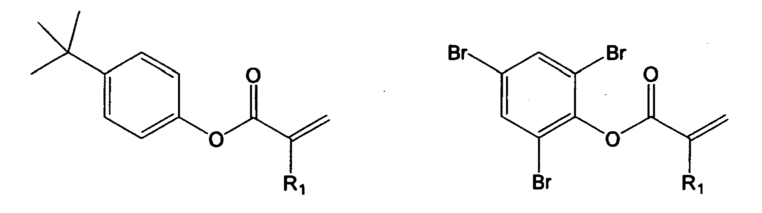

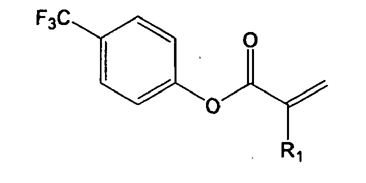

Specific examples of monofunctional (meth)acrylate 2 include the compounds below.

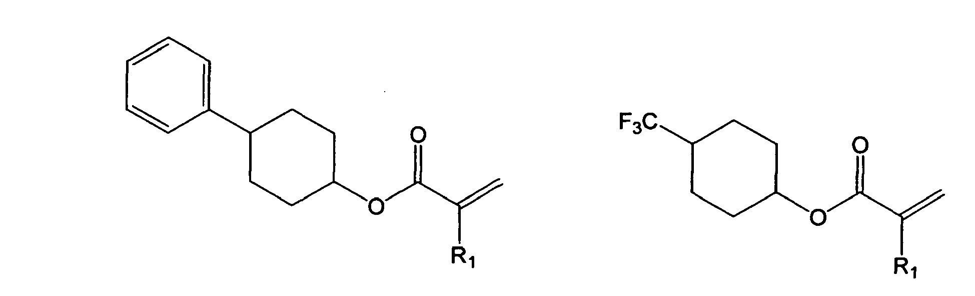

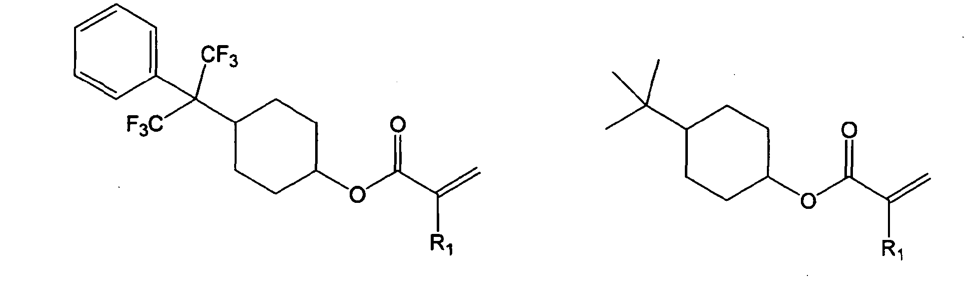

### 3. Component (C)

The composition of the present invention may comprise as necessary an ethylenically unsaturated group-containing compound.

As component (C), various types of compound may be used as long as they are compounds other than component (A) and component (B). As component (C), there are a monomer, an oligomer, and a polymer.

### 3-1. Monomer

Examples of the monomer include a compound having one (meth)acryloyl group.

Examples of this compound include ethyl (meth)acrylate, propyl (meth)acrylate, butyl (meth)acrylate, pentyl (meth)acrylate, hexyl (meth)acrylate, heptyl (meth)acrylate, 2-ethylhexyl (meth)acrylate, benzyl (meth)acrylate, and isobornyl (meth)acrylate.

Other than (meth)acrylates, examples include (meth)acrylamide derivatives such as *N*-methylacrylamide, *N*-isopropylacrylamide, *N,N*-dimethylaminopropylacrylamide, *N*,*N*-dimethylacrylamide, *N*-vinylformamide, *N*-vinyl-*N*-methylformamide, *N*-vinylacetamide, *N*-vinyl-*N*-methylacetamide, and acryloylmorpholine; and *N*-vinyl compounds such as *N*-vinylpyrrolidone and *N*-vinylcaprolactam.

Examples of compounds having two or more (meth)acryloyl groups include alkylene glycol di(meth)acrylates such as ethylene glycol di(meth)acrylate, tetraethylene glycol di(meth)acrylate, propylene glycol di(meth)acrylate, and tripropylene glycol di(meth)acrylate; glycol di(meth)acrylates such as 1,6-hexanediol di(meth)acrylate and neopentyl glycol di(meth)acrylate; bisphenol di(meth)acrylates such as bisphenol A di(meth)acrylate or a derivative thereof with a halogen substituent on an aromatic ring and bisphenol F di(meth)acrylate or a derivative thereof with a halogen substituent on an aromatic ring; polyol poly(meth)acrylates such as dimethyloltricyclodecane di(meth)acrylate, trimethylolpropane tri(meth)acrylate, ditrimethylolpropane tetra(meth)acrylate, pentaerythritol tri(meth)acrylate, pentaerythritol tetra(meth)acrylate, and dipentaerythritol hexa(meth)acrylate; a poly(meth)acrylate of an alkylene oxide adduct of the above polyols; di- or tri-(meth)acrylates of an isocyanuric acid alkylene oxide; and moreover, compounds described in 'Saishin UV Koka Gijutsu' (Latest UV Curing Technology) (Insatsu Joho Kyokai (Printing Information Society), 1991, on pages 53 to 56.

### 3-2. Oligomer

Examples of the oligomer include polyester (meth)acrylate, epoxy (meth)acrylate, and polyether (meth)acrylate.

### 3-2-1. Polyester (meth)acrylate oligomer

Examples of the polyester (meth)acrylate oligomer include a dehydration condensation product of a polyester polyol with (meth)acrylic acid.

Examples of the polyester polyol include a reaction product of a polyol with a carboxylic acid or an anhydride thereof.

Examples of the polyol include low molecular weight polyols such as ethylene glycol, diethylene glycol, triethylene glycol, tetraethylene glycol, polyethylene glycol, propylene glycol, dipropylene glycol, tripropylene glycol, polypropylene glycol, butylene glycol, polybutylene glycol, tetramethylene glycol, hexamethylene glycol, neopentyl glycol, cyclohexanedimethanol, 3-methyl-1,5-pentanediol, 1,6-hexanediol, trimethylolpropane, glycerol, pentaerythritol, and dipentaerythritol, and alkylene oxide adducts thereof.

Examples of the carboxylic acid or an anhydride thereof include dibasic acids such as orthophthalic acid, isophthalic acid, terephthalic acid, adipic acid, succinic acid, fumaric acid, maleic acid, hexahydrophthalic acid, tetrahydrophthalic acid, and trimellitic acid, and anhydrides thereof.

As a polyester poly(meth)acrylate other than above, there can be cited compounds described in the above-mentioned 'UV·EB Koka Zairyo' (UV-EB Curing Materials) on pages 74 to 76.

### 3-2-2. Epoxy (meth)acrylate oligomer

The epoxy (meth)acrylate is a compound obtained by an addition reaction of (meth)acrylic acid to an epoxy resin, and examples thereof include compounds described in the above-mentioned 'UV·EB Koka Zairyo' on pages 74 to 75.

Examples of the epoxy resin include an aromatic epoxy resin and an aliphatic epoxy resin.

Specific examples of the aromatic epoxy resin include resorcinol diglycidyl ether; a di- or poly-glycidyl ether of bisphenol A, bisphenol F, bisphenol S, bisphenol fluorene, or an alkylene oxide adduct thereof; a novolac epoxy resin such as a phenol novolac epoxy resin or a cresol novolac epoxy resin; glycidyl phthalimide; and o-phthalic acid diglycidyl ester.

Other than above, there can be cited compounds described in 'Epokishi Jushi -Saishinnoshinpo-' (Epoxy Resins -Latest Advances-) (Shokodo, 1990), Chapter 2 and 'Kobunshi Kako' (Polymer Processing), Supplement 9, Vol. 22, Special Edition, Epoxy Resins (Kobunshikankokai, 1973) on pages 4 to 6 and 9 to 16.

Specific examples of the aliphatic epoxy resin include the diglycidyl ether of an alkylene glycol such as ethylene glycol, propylene glycol, 1,4-butanediol, or 1,6-hexanediol; the diglycidyl ether of a polyalkylene glycol such as the diglycidyl ether of polyethylene glycol or polypropylene glycol; the diglycidyl ether of neopentyl glycol, dibromoneopentyl glycol, or an alkylene oxide adduct thereof; the polyglycidyl ether of a polyhydric alcohol such as the di- or tri-glycidyl ether of trimethylolethane, trimethylolpropane, glycerol, or an alkylene oxide adduct thereof, or the di-, tri-, or tetra-glycidyl ether of pentaerythritol or an alkylene oxide adduct thereof; the di- or poly-glycidyl ether of hydrogenated bisphenol A or an alkylene oxide adduct thereof; tetrahydrophthalic acid diglycidyl ether; and hydroquinone diglycidyl ether.

Other than above, there can be cited compounds described in the above 'Kobunshi Kako', Epoxy Resin Supplement, pages 3 to 6. Other than these aromatic and aliphatic epoxy resins, there can be cited an epoxy compound having a triazine nucleus in its skeleton, for example, TEPIC (Nissan Chemical Industries, Ltd.) and DENACOL EX-310 (Nagase Chemicals Ltd.), and there also can be cited compounds described in the above 'Kobunshi Kako', Epoxy Resin Supplement, pages 289 to 296.

The alkylene oxide of the alkylene oxide adducts above is preferably ethylene oxide, propylene oxide.

### 3-2-3. Polyether (meth)acrylate oligomer

As the polyether (meth)acrylate oligomer, there is a polyalkylene glycol (meth)diacrylate, and examples thereof include polyethylene glycol di(meth)acrylate, polypropylene glycol di(meth)acrylate, and polytetramethylene glycol di(meth)acrylate.

### 3-3. Polymer

As the polymer, there are a (meth)acrylic polymer having a (meth)acryloyloxy group and one formed by introducing a (meth)acryloyl group into a side chain of a functional group-containing (meth)acrylic polymer, and examples thereof include compounds described in 'UV·EB Koka Gijutsu' above on pages 78 to 79.

As a compound for component (C), it is preferable to select it so that the glass transition temperature of a cured material of a composition described later is in a preferred range.

### 4. Mixing proportions

In the present invention, with regard to the proportions of components (A), (B), and (C), component (A) is 5 to 50 weight %, component (B) is 5 to 95 weight %, and component (C) is 0 to 85 weight %, and preferably component (A) is 15 to 40 weight %, component (B) is 5 to 60 weight %, and component (C) is 0 to 80 weight %.

When the proportion of component (A) is less than 5 weight %, the adhesive power under high temperature is degraded, whereas when it is greater than 50 weight %, the initial adhesive power and the adhesive power under high humidity are degraded. When component (B) is less than 5 weight %, the adhesive strength under high temperature or high humidity is degraded, and when it is greater than 95 weight %, the adhesive strength under high temperature is degraded. When component (C) is greater than 85 weight %, the initial adhesive power and the adhesive power under high temperature or high humidity are degraded.

It is necessary for the composition of the present invention to comprise 5 to 30 weight % of methacrylate compound in the total amount of components (A) to (C). When it is less than 5 weight %, the adhesive strength might be degraded, and when it exceeds 30 weight %, the curability is degraded, and the productivity might be lowered.

The methacrylate compound may be appropriately selected from components (A), (B), and (C) above.

### 5. Other components

When the composition of the present invention is cured by UV rays, a photopolymerization initiator may be added as necessary.

Examples of the photopolymerization initiator include benzoin and alkyl ethers thereof such as benzoin, benzoin methyl ether, benzoin ethyl ether, and benzoin isopropyl ether; acetophenones such as acetophenone, 2,2-dimethoxy-2-phenylacetophenone, 2,2-diethoxy-2-phenylacetophenone, 1,1-dichloroacetophenone, 1-hydroxyacetophenone, 1-hydroxycyclohexyl phenyl ketone, and 2-methyl-1-[4-(methylthio)phenyl]-2-morpholinopropan-1-one; anthraquinones such as 2-methylanthraquinone, 2-ethylanthraquinone, 2-tertiary-butylanthraquinone, 1-chloroanthraquinone, and 2-amylanthraquinone; thioxanthones such as 2,4-dimethylthioxanthone, 2,4-diethylthioxanthone, 2-chlorothioxanthone, and 2,4-diisopylthioxanthone; ketals such as acetophenone dimethyl ketal and benzil dimethyl ketal; monoacylphosphine oxides and bisacylphosphine oxides such as 2,4,6-trimethylbenzoyldiphenylphosphine oxide; benzophenones such as benzophenone; and xanthones. These photopolymerization initiators may be used singly or in a combination with a benzoic acid-based, amine-based photopolymerization initiation accelerator.

The mixing proportion of the photopolymerization initiator is preferably at least 0.1 parts by weight but no greater than 10 parts by weight relative to 100 parts by weight of the composition, and more preferably at least 0.5 parts by weight but no greater than 5 parts by weight. From the viewpoint of there being little coloration over time, an α-hydroxyacetophenone-based or phosphine oxide-based photoinitiator is preferable.

Furthermore, the composition of the present invention may comprise, at an amount of up to 5 parts by weight relative to 100 parts by weight of the total of component (A) and component (B) and, as necessary component (C), a durability improving agent such as an antioxidant, a UV absorber, or a HALS (hindered amine light stabilizer), a leveling agent for making coating thickness uniform, or an antifoaming agent for suppressing foaming marks.

### 6. Production process and application method

A process for producing the composition of the present invention is not particularly limited, and it is obtained by stirring or mixing the essential components of the present invention or the essential components and another component as necessary by a standard method.

The composition of the present invention preferably gives a cured material having a glass transition temperature (hereinafter, called Tg) of 10°C to 70°C. When the Tg is less than 10°C, the adhesive strength during a heat resistance test might be degraded, and when the Tg exceeds 70°C, the initial peel strength might be degraded.

In the present invention, Tg means the temperature at which the main peak of the loss tangent (tan δ) of a viscoelastic spectrum of a cured material measured at 1 Hz is a maximum.

The composition of the present invention may be used for adhering various types of substrate, its application method may be a standard method, and examples thereof include a method in which after a substrate is coated, it is irradiated with active energy beam.

Examples of the active energy beam include UV rays, X rays, and an electron beam, and UV rays are preferable since inexpensive equipment may be employed. As the light source when curing is carried out with UV rays, various types may be used, and examples thereof include a pressurized or high pressure mercury lamp, a metal halide lamp, a xenon lamp, an electrodeless discharge lamp, and a carbon arc lamp. When curing is carried out with an electron beam, as an electron beam (EB) irradiator that can be used various types of equipment may be used, and examples thereof include a Cockcroft-Walton type, a Van de Graaff type, and a resonant transformer type. The electron beam preferably has an energy of 50 to 1,000 eV, and more preferably 100 to 300 eV.

The composition of the present invention may preferably be used in production of a laminate, and a standard method normally carried out in production of a laminate may be employed. For example, there is a method involving coating a first substrate with the composition, laminating a second substrate thereon, and then irradiating from the surface of either substrate with active energy beam.

The composition of the present invention may preferably be used as an adhesive composition for an optical material and also as an adhesive composition for optical film lamination.

In this case, a thin layer adherend used as an optical member is used as the substrate, and a laminate is obtained by the same method as above.

The thin layer adherend used as an optical member mainly employs a plastic film and is required to be transparent to active energy beam, the film thickness may be selected according to the thin layer adherend used and the intended purpose, and the thickness is preferably no greater than 1 mm.

Examples of the plastic of a plastic film include a polyvinyl chloride resin, a polyvinylidene chloride, a cellulose-based resin, polyethylene, polypropylene, polystyrene, an acrylonitrile-butadiene-styrene resin (ABS resin), polyamide, polyester, polycarbonate, polyurethane, polyvinyl alcohol, an ethylene-vinyl acetate copolymer, and a chlorinated polypropylene. According to the intended application, the surface may be subjected to a treatment such as metal vapor deposition.

A method for coating a thin layer adherend may be any conventional method, and examples thereof include methods involving a natural coater, a knife belt coater, a floating knife, a knife over roll, a knife on blanket, spray, dip, a kiss roll, a squeeze roll, a reverse roll, an air blade, a curtain flow coater, and a gravure coater.

Furthermore, the coating thickness of the composition of the present invention may be selected according to the thin layer adherend used and the intended purpose, and is preferably 0.1 to 1,000 µm, and more preferably 1 to 50 µm.

Since a laminate film or sheet obtained from the adhesive composition of the present invention has excellent adhesive power under high temperature and high humidity conditions, it can suitably be used for an optical film or sheet such as a polarizing film, a retardation film, a prism sheet, a luminance improving film, a light guide plate, or a diffusing plate used in a liquid crystal display device.

### Examples

The present invention is explained in detail below by reference to Examples and Comparative Examples. 'Parts' in each example below denotes parts by weight.

### Examples 1 to 5

Components (A), (B), and (C) and a photopolymerization initiator shown in Table 1 below were dissolved by heating at 60°C for 1 hour, thus giving active energy beam-curable adhesive compositions.

The compositions thus obtained were evaluated in accordance with the test methods below. The results are given in Table 2.

**(Table 1)**

| Ex. | (A) | | (B) | | | (C) | | | Photopolymerization initiator | | Other¹¹⁾ | MA proportion¹²⁾ |
|---|---|---|---|---|---|---|---|---|---|---|---|---|
| | M1200¹⁾ | UN9200 A²⁾ | OPPA³⁾ | M1200¹⁾ | BCHM⁵⁾ | HBA⁶⁾ | HEMA⁷⁾ | IBXA⁸⁾ | I-184⁹⁾ | TPO¹⁰⁾ | | |
| 1 | 30 | | 60 | | | | 10 | | 3 | | | 10 |
| 2 | | 20 | | 40 | | | 20 | 20 | | 3 | | 20 |
| 3 | 30 | | | | 25 | 45 | | | 3 | | | 25 |
| 4 | 30 | | 40 | | | 15 | 15 | | 3 | | | 15 |
| 5 | 30 | | 40 | | | 15 | 15 | | 1 | 1 | 0.4 | 15 |

In Table 1, the figures mean the number of parts, and the abbreviations have the following meanings.
1) M1200: polyester-based urethane acrylate having a nonaromatic polyester skeleton, weight-average molecular weight about 5000 (ARONIX M-1200, manufactured by Toagosei Co., Ltd.)
2) UN9200A: polycarbonate-based urethane acrylate having a nonaromatic polycarbonate skeleton, weight-average molecular weight about 20,000 (ART RESIN UN-9200A, manufactured by Negami Chemical Industrial Co., Ltd.)
3) OPPA: orthophenylphenol acrylate (ARONIX TO-2344, manufactured by Toagosei Co., Ltd.)
4) PCPA: *p*-cumylphenol acrylate (ARONIX TO-2345, manufactured by Toagosei Co., Ltd.)
5) BCHM: *t*-butylcyclohexyl methacrylate (TBCHMA, manufactured by NOF Corporation)
6) HBA: hydroxybutyl acrylate (4-HBA, manufactured by Osaka Organic Chemical Industry Ltd.)
7) HEMA: hydroxyethyl methacrylate (LIGHT-ESTER HO, manufactured by Kyoeisha Chemical Co., Ltd.)
8) IBXA: isobornyl acrylate (LIGHT-ACRYLATE IB-XA, manufactured by Kyoeisha Chemical Co., Ltd.)
9) I-184: 1-hydroxycyclohexyl phenyl ketone (IRGACURE 184, manufactured by Ciba Specialty Chemicals)
10) TPO: 2,4,6-trimethylbenzoyldiphenylphosphine oxide (Lucirin TPO, manufactured by BASF)
11) Other: a mixture of 0.2 parts of TINUVIN 1130 and 0.2 parts of TINUVIN 292. TINUVIN 1130; benzotriazole-based UV absorber (TINUVIN 1130, manufactured by Ciba Specialty Chemicals), TINUVIN 292; hindered amine light stabilizer (TINUVIN 292, manufactured by Ciba Specialty Chemicals)
12) The proportion of methacrylate in the total amount of components (A) to (C) (units: weight %)

### 1) Test methods

### (1) Production of sample

A 75 µm thick triacetyl cellulose (hereinafter, abbreviated to TAC) film was coated using a wire bar coater with a composition obtained to give a coating thickness of 10 µm. A 75 µm thick TAC film was laminated thereon by means of a nip roller, and this was sent past a 120 W/cm focused metal halide lamp twice at a position 10 cm beneath the lamp at a conveyor speed of 5 m/min, thus bonding the films and giving a laminate film. This was called sample A. A laminate film was produced in the same manner as above except that the TAC film was changed to a 50 µm thick polyethylene terephthalate (hereinafter, abbreviated to PET) film and the coating thickness was changed to 50 µm. This was called sample B. Sample A thus obtained was allowed to stand under the following conditions and then subjected to an evaluation of peel strength and appearance.
Initial state: allowed to stand at room temperature for 30 minutes
After high temperature test: at 90°C for 500 hours
After high humidity test: at 70°C and 95%RH for 500 hours

Sample B thus obtained was allowed to stand under the following conditions and then subjected to an evaluation of coloration.
After high temperature test: at 90°C for 500 hours

### (2) Peel strength

The peel strength of a sample that had been subjected to the high temperature test and the high humidity test under the above-mentioned conditions was measured using a tensile tester under the conditions below.
Test piece: 25 mm x 100 mm
Peel angle: 180 degrees
Peel speed: 200 mm/min

When the adhesive strength was sufficiently high and the substrate broke during measurement of the peel strength, it was described as base material failure.

The measurement unit for the peel strength, gf/inch, is defined as 1 (gf/inch) = 3.86 x 10-3 (N/cm).

### (3) Observation of appearance

A sample was subjected to the high temperature test and the high humidity test under the above-mentioned conditions and then subjected to an evaluation of its appearance by eye. Good, fair, and poor in the table denote the following. Good: good without whitening(opaque) or peeling.
Fair: whitened(opaque).
Poor: whitened(opaque) and peeled.

### (4) Measurement of coloration

The ΔYI of sample B was measured using an integrating sphere type spectral transmittance meter (DOT-3C, manufactured by Murakami Color Research Laboratory). ΔYI is expressed as the difference between the YI value of the laminate film after a heat resistance test and the YI value of the PET film before the test.

**(Table 2)**

| Ex. | Tg(°C) | Peel strength | | | | | | Appearance | | Coloration ΔYI |
|---|---|---|---|---|---|---|---|---|---|---|
| | | Initial stage | | After high temperature test | | After high humidity test | | After high temperature test | After high humidity test | After high temperature test |
| | | (N/mm) | (gf/inch) | (N/mm) | (gf/inch) | (N/mm) | (gf/inch) | | | |
| 1 | 59 | 0.344 | 890 | 0.355 | 920 | D:288 | 740 | Good | Good | 1.0 |
| 2 | 46 | 0.375 | 9.70 | 0.378 | | 980 0.313 | 810 | Good | Good | 0.8 |
| 3 | 19 | 0.394 | 1020 | 0.344 | | 890 0.378 970 | | Good | Good | 0.9 |
| 4 | 45 | 0.305 | 790 | 0.313 | 810 | 0.270 | 700 | Good | Good | 1.0 |
| 5 | 44 | 0.313 | 810 | 0.309 | 800 | 0.286 | 740 | Good | Good | 0.7 |

| | | | | | | | | | | |
|---|---|---|---|---|---|---|---|---|---|---|
| 1gf/inch=0.00038609 N/mm | | | | | | | | | | |

### Comparative Examples 1 to 7

Active energy beam-curable adhesive compositions were produced in the same manner as in the Examples except that the components shown in Table 2 below were used.

The compositions thus obtained were subjected to the same evaluation as in Example 1. The results are given in Table 4. Since Comparative Example 4 did not cure completely under the same conditions, irradiation was repeated a further two times, and this completely cured sample was used.

**(Table 3)**

| Comp. Ex. | (A) | (A)' | (B) | (B)' | (C) | | | | | Photopolymerization initiator | MA proportion |
|---|---|---|---|---|---|---|---|---|---|---|---|
| | M1200 | M1600¹³⁾ | OPPA | NPA¹⁴⁾ | HBA | HEMA | IBXA | M110¹⁵⁾ | CHMA¹⁶⁾ | I-184 | |
| 1 | 60 | | 10 | | | 30 | | | | 3 | 30 |
| 2 | | | 50 | | | 25 | 25 | | | 3 | 25 |
| 3 | 30 | | 40 | | 30 | | | | | 3 | 0 |
| 4 | 40 | | 10 | | | 50 | | | | 3 | 50 |
| 5 | 30 | | | | 45 | | | | 25 | 3 | 25 |
| 6 | | 30 | 40 | | | | 15 | 15 | | 3 | 0 |
| 7 | 40 | | | 40 | 20 | | | | | 3 | 0 |

In Table 3, the figures denote the number of parts. Other than those below, the abbreviations have the same meanings as in Table 1.
13) M1600: polyether-based urethane acrylate, weight-average molecular weight about 3000 (ARONIX M-1600, manufactured by Toagosei Co., Ltd.)
14) NPA: nonylphenyl acrylate
Compound represented by formula (3) below. 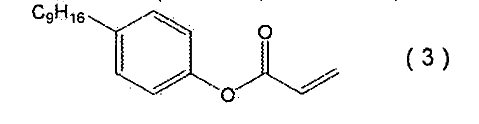
15) M110: p-cumylphenol ethylene oxide-modified acrylate (ARONIX M-110, manufactured by Toagosei Co., Ltd.)
16) CHMA: cyclohexyl methacrylate (CHMA, manufactured by Mitsubishi Rayon Co., Ltd.)

**(Table 4)**

| Comp. Ex. | Tg(°C) | Peel strength | | | | | | Appearance | | Coloration ΔYI |
|---|---|---|---|---|---|---|---|---|---|---|
| | | Initial stage | | After high temperature test | | After high humidity test | | After high temperature test | After high humidity test | After high temperature test |
| | | (N/mm) | (gf/inch) | (N/mm) | (gf/inch) | (N/mm) | (gf/inch) | | | |
| 1 | 55 | 0.151 | 390 | 0.0734 | 190 | 0.0058 | 15 | Good | Poor | 1.3 |
| 2 | 81 | 0.0426 | 110 | 0.027 | 70 | 0.0386 | 100 | Poor | Fair | 1.0 |
| 3 | 26 | 0.104 | 270 | 0.0772 | 200 | 0.0734 | 190 | Good | Fair | 1.1 |
| 4 | 68 | 0.0734 | 190 | 0.0811 | 210 | 0.012 | 30 | Fair | Poor | 2.0 |
| 5 | 15 | 0.0888 | 230 | 0.0734 | 190 | 0.0656 | 170 | Good | Good | 1.8 |
| 6 | 68 | 0.0927 | 240 | 0.0541 | 140 | 0.0039 | 10 | Good | Poor | 2.8 |
| 7 | 30 | 0.344 | 890 | 0.305 | 790 | 0.347 | 900 | Good | Good | 2.5 |

| | | | | | | | | | | |
|---|---|---|---|---|---|---|---|---|---|---|
| 1gf/inch=0.00038609 N/mm | | | | | | | | | | |

### Industrial Applicability

In accordance with the adhesive composition of the present invention, excellent adhesive power can be maintained under high temperature and high humidity conditions, there is little coloration over time, it is effective in laminate bonding of thin layer adherends such as plastic films used as various types of optical members, and it can be particularly suitably used in the production of an optical film used in a liquid crystal display device.

## Claims

1. An active energy beam-curable adhesive composition comprising:
(A) 5 to 50 weight % of a urethane (meth)acrylate having a polyester or polycarbonate skeleton;
(B) 5 to 95 weight % of a compound having one (meth)acryloyl group represented by formula (1) below or/and a compound having one (meth)acryloyl group represented by formula (2) below; and
as necessary (C) 0 to 85 weight % of an ethylenically unsaturated group-containing compound other than components (A) and (B) above;
5 to 30 weight % of methacrylate compound being contained in the total amount of components (A) to (C), 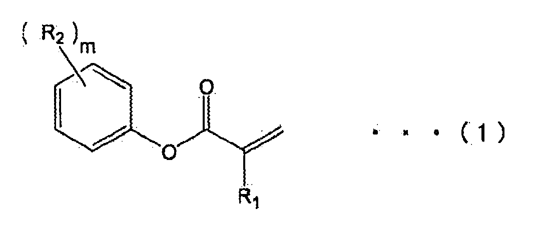 wherein R₁ denotes a hydrogen atom or a methyl group, R₂ denotes a halogen atom or a hydrocarbon group that has 10 or less carbons and does not have a hydrogen atom on the α-position carbon atom, and m denotes an integer of 1 to 5, and 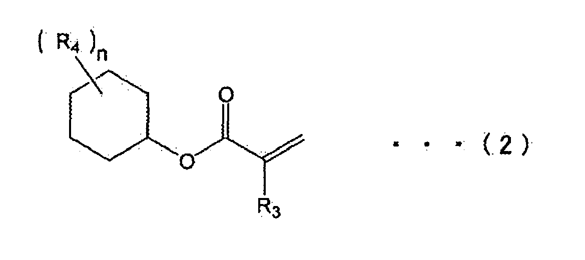 wherein R₃ denotes a hydrogen atom or a methyl group, R₄ denotes a halogen atom or a hydrocarbon group that has 10 or less carbons and does not have a hydrogen atom on the α-position carbon atom, and n denotes an integer of 1 to 5.

2. The active energy beam-curable adhesive composition according to claim 1, wherein component (B) is a compound having a phenyl group or a cumyl group as R₂ in formula (1).

3. The active energy beam-curable adhesive composition according to claim 1, wherein component (B) is a compound having a *t-*butyl group as R₄ in formula (2).

4. An active energy beam-curable adhesive composition for an optical material, comprising the composition according to any one of claim 1 to claim 3.

5. An active energy beam-curable adhesive composition for optical film lamination, comprising the composition according to any one of claim 1 to claim 3.

6. A cured material of an active energy beam-curable adhesive composition according to any one of claim 1 to claim 5, wherein the cured material has a glass transition temperature of 10°C to 70°C.

7. A process for producing a laminate, the process comprising:
coating a first substrate with the composition according to any one of claim 1 to claim 5, laminating a second substrate thereon, and then irradiating from the surface of either substrate with active energy beam.

## Patentansprüche

1. Aktinisch härtbare Klebstoffzusammensetzung, umfassend:
(A) 5 bis 50 Gew.-% eines Urethan(meth)acrylats mit einem Polyester- oder Polycarbonatgerüst;
(B) 5 bis 95 Gew.-% einer Verbindung mit einer (Meth)acryloyl-Gruppe gemäß der unten dargestellten Formel (1) oder/und einer Verbindung mit einer (Meth)acryloyl-Gruppe gemäß der unten dargestellten Formel (2); und,
gegebenenfalls, (C) 0 bis 85 Gew.-% einer Verbindung, die eine ethylenisch ungesättigte Gruppe enthält und die sich von den obigen Komponenten (A) und (B) unterscheidet;
5 bis 30 Gew.-% einer Methacrylat-Verbindung, welche in der Gesamtmenge der Komponenten (A) bis (C) enthalten ist, 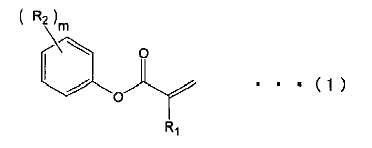 worin R₁ ein Wasserstoffatom oder eine Methylgruppe bezeichnet, R₂ ein Halogenatom oder eine Kohlenwasserstoffgruppe bezeichnet, welche 10 oder weniger Kohlenstoffatome besitzt und kein Wasserstoffatom an dem Kohlenstoffatom in α-Position aufweist, und m eine ganze Zahl von 1 bis 5 bedeutet, und 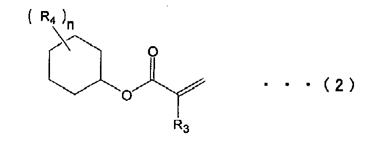 worin R₃ ein Wasserstoffatom oder eine Methylgruppe bezeichnet, R₄ ein Halogenatom oder eine Kohlenwasserstoffgruppe bezeichnet, welche 10 oder weniger Kohlenstoffatome besitzt und kein Wasserstoffatom an dem Kohlenstoffatom in α-Position aufweist, und n eine ganze Zahl von 1 bis 5 bedeutet.

2. Aktinisch härtbare Klebstoffzusammensetzung gemäß Anspruch 1, wobei Komponente (B) eine Verbindung ist, die eine Phenylgruppe oder eine Cumylgruppe als R₂ in Formel (1) aufweist.

3. Aktinisch härtbare Klebstoffzusammensetzung gemäß Anspruch 1, wobei Komponente (B) eine Verbindung ist, die eine *t-*Butylgruppe als R₄ in Formel (2) aufweist.

4. Aktinisch härtbare Klebstoffzusammensetzung für ein optisches Material, welche die Zusammensetzung gemäß irgendeinem der Ansprüche 1 bis 3 umfasst.

5. Aktinisch härtbare Klebstoffzusammensetzung für die Laminierung eines optischen Films, welche die Zusammensetzung gemäß irgendeinem der Ansprüche 1 bis 3 umfasst.

6. Gehärtetes Material aus einer aktinisch härtbaren Klebstoffzusammensetzung gemäß irgendeinem der Ansprüche 1 bis 5, wobei das gehärtete Material eine Glasübergangstemperatur von 10°C bis 70 °C aufweist.

7. Verfahren zur Herstellung eines Laminats, wobei das Verfahren umfasst:
Beschichten eines ersten Substrats mit der Zusammensetzung gemäß irgendeinem der Ansprüche 1 bis 5, Laminieren eines zweiten Substrats auf das erste Substrat und anschließendes Bestrahlen von der Oberfläche eines der beiden Substrate mit aktiver Energiestrahlung.

## Revendications

1. Composition adhésive durcissable par faisceau d'énergie active comprenant :
(A) de 5 à 50 % en poids d'un (méth)acrylate d'uréthane comprenant un squelette polyester ou polycarbonate ;
(B) de 5 à 95 % en poids d'un composé comprenant un groupe (méth)acryloyle représenté par la formule (1) ci-dessous et/ou d'un composé comprenant un groupe (méth)acryloyle représenté par la formule (2) ci-dessous ; et
selon le besoin (C) de 0 à 85 % en poids d'un composé comprenant un groupe à insaturation éthylénique autre que les composants (A) et (B) ci-dessus ;
de 5 à 30 % en poids de composé méthacrylate étant contenus dans la quantité totale des composants (A) à (C), 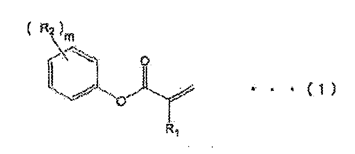 dans laquelle R₁ représente un atome d'hydrogène ou un groupe méthyle, R₂ représente un atome d'halogène ou un groupe hydrocarboné qui comprend 10 atomes de carbone ou moins et ne comprend pas d'atome d'hydrogène sur l'atome de carbone en position α, et m représente un nombre entier valant de 1 à 5, et 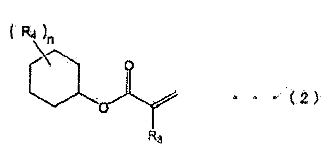 dans laquelle R₃ représente un atome d'hydrogène ou un groupe méthyle, R₄ représente un atome d'halogène ou un groupe hydrocarboné qui comprend 10 atomes de carbone ou moins et ne comprend pas d'atome d'hydrogène sur l'atome de carbone en position α, et n représente un nombre entier valant de 1 à 5.

2. Composition adhésive durcissable par faisceau d'énergie active selon la revendication 1, dans laquelle le composant (B) est un composé comprenant un groupe phényle ou un groupe cumyle en tant que R₂ dans la formule (1).

3. Composition adhésive durcissable par faisceau d'énergie active selon la revendication 1, dans laquelle le composant (B) est un composé comprenant un groupe t-butyle en tant que R₄ dans la formule (2).

4. Composition adhésive durcissable par faisceau d'énergie active pour un matériau optique comprenant la composition selon l'une quelconque des revendications 1 à 3.

5. Composition adhésive durcissable par faisceau d'énergie active pour une stratification de film optique comprenant la composition selon l'une quelconque des revendications 1 à 3.

6. Matériau durci d'une composition adhésive durcissable par faisceau d'énergie active selon l'une quelconque des revendications 1 à 5, dans lequel le matériau durci possède une température de transition vitreuse de 10 °C à 70°C.

7. Procédé de production d'un stratifié, le procédé comprenant :
le revêtement d'un premier substrat avec la composition selon l'une quelconque des revendications 1 à 5, la stratification d'un second substrat sur celui-ci, puis l'irradiation de la surface de l'un des deux substrats avec un faisceau d'énergie active.
